# EUROPEAN PATENT APPLICATION

(11) **EP 2 620 642 A1**
(43) Date of publication of application: **31.07.2013**
(21) Application number: 12152811.1
(22) Date of filing: 27.01.2012
(51) Int. Cl.: F03D 11/00, F03D 11/02, F16C 33/66

(54) **Scraper element for a direct drive main bearing of a wind turbine**

(71) Applicant: Siemens Aktiengesellschaft, 80333 München (DE)
(72) Inventor: Nielsen, Rune, 7430 kast (DK); Noer, Bjarne, 8800 Viborg (DK); Rosengren, Jesper Staerke, 7300 Jelling (DK); Soerensen, Steffen, 8382 Hinnerup (DK)

(57) **Abstract**

The present invention relates to a bearing system (100) for a wind turbine (300). The bearing system (100) comprises a first bearing ring (130), a second bearing ring (140), a roller element (106), and a scraper element (403). The first bearing ring (130) has a first surface (107) to which a first turbine element (210) of the wind turbine is coupleable. The second bearing ring (140) has a second surface (108) to which a second turbine element (220) of the wind turbine (300) is coupleable. The roller element (106) is installed inside an inner volume (102) between the first bearing ring (130) and the second bearing ring (140) and which supports the first bearing ring (130) rotatably to the second bearing ring (140). The scraper element (403) is coupled to the first bearing ring (130), wherein the scraper element (403) abuts onto the second bearing ring (140) such that grease is scrapable off from the second bearing ring (140).

## Description

### Field of invention

The present invention relates to a bearing system for a wind turbine, in particular a direct drive wind turbine. Furthermore, the present invention relates to a method of scraping off grease from a bearing ring of a wind turbine.

### Art Background

A wind turbine comprises in general a hub which carries the wind turbine blades and a generator with a stator and a rotor. The hub is coupled to the generator by a turbine rotor. In particular in direct drive wind turbines, the turbine rotor is coupled to the rotor of the generator without applying a gear device between the shaft and the rotor of the generator.

The generator is installed in a nacelle of the wind turbine. The rotating part, such as the shaft and the rotor of the generator, are rotatably coupled by a main bearing to a structural part of the wind turbine, such as the nacelle. Furthermore, the rotating hub may be coupled as well to the main bearing.

The main bearing of the wind turbine is in general a roller bearing such that the rotating bearing ring may be rotatably coupled to the non-rotating bearing ring. The rotating parts of the wind turbine are coupled to the rotating bearing ring and the static parts of the wind turbine are coupled to the non-rotating bearing ring.

The main bearing is greased in order to reduce friction between the rotating and the non-rotating bearing ring. Conventional sealing arrangements of the main bearing cannot avoid completely a leak of grease out of the main bearing. The leaked grease may be spilled out of the main bearing and into the generator or the hub structure of the wind turbine, which can cause damages to the generator, for example. This is especially challenging for a direct drive wind turbine because very large main bearings are used with a significant deformation and because even relatively small amount of grease spilling may be problematic as it ends up inside the generator itself.

A sealing of a main bearing may be provided by using a tight seal with a spring loaded seal lip. Deformations and relative movements of the bearing parts will cause some wear of the seal lip and is very difficult to keep the bearing sealed, which means that the seal needs to be replaced frequently to avoid the grease leakage.

Moreover, there is a risk of a short circuitry, e.g. caused by a lightning stroke, between the rotating and static parts which are located inside the nacelle (e.g. the generator parts) and the rotating and static parts which are located outside of the nacelle (e.g. the hub and the blades). In particular, if a frequency converter is connected to the generator, the risk of leak current is increased. If there is not a proper insulation leak currents will pass through the bearing, which is likely to lead to premature bearing failures.

In particular, if there is not a proper insulation between the rotating and the static parts leak currents will pass through the main bearing, which is likely to lead to premature bearing failures. If there is insufficient friction, the bearing ring may move relative to the turbine structure if the turbine is subjected to high loads. In order to prevent leak currents, the bearings may be coated with an isolating coating or non-conductive roller elements (e.g. ceramic rollers) may be applied. Ceramic rollers are expensive and coating of the bearing may not obtain sufficient robustness and friction for the wind turbine application.

### Summary of the Invention

It may be an objective of the present invention to provide a proper sealing of a bearing of a wind turbine.

This objective may be solved by a bearing system for a wind turbine and by a method of scraping off grease from a bearing ring of a wind turbine according to the independent claims.

According to a first aspect of the present invention, a bearing system for a wind turbine is presented. The bearing system comprises a first bearing ring, a second bearing ring, a roller element and a scraper element. The first bearing ring has a first surface to which a first turbine element of the wind turbine is coupleable. The second bearing ring has a second surface to which a second turbine element of the wind turbine is coupleable. The roller element is installed inside an inner volume between the first bearing ring and the second bearing ring and which supports the first bearing ring rotatably to the second bearing ring. The scraper element is coupled to the first bearing ring, wherein the scraper element abuts onto the second bearing ring such that grease is scrapable off from the second bearing ring.

The wind turbine may be in particular a direct drive wind turbine. A turbine rotor of the wind turbine is driven by the wind attacking at the wind turbine blades. The turbine rotor drives directly a rotor of a generator. By a direct drive wind turbine, the turbine rotor may be obsolete and a hub of the wind turbine is directly coupled by the main bearing to a rotor of a wind turbine generator. The first turbine element may be a rotating turbine element and the second turbine element may be a static turbine element and vice versa. The rotating turbine element may be for example the rotor of the generator, the hub or a turbine rotor of the wind turbine, for example. The static wind turbine element may be for example a structural part, such as a part of a nacelle of the wind turbine or a stator of the generator.

The first turbine element and/or the second turbine element may be an element (e.g. the hub or the turbine rotor) which extends and protrudes from the inside to the outside of the nacelle, such that the first turbine element and/or the second turbine element may be exposed to lighting strokes, for example.

By the term "static turbine element" elements are described which do not rotate with the turbine rotor under the influence of the wind attacking at the blades. However, the static elements may have a relative movement with respect to the ground or to the wind turbine tower. For example, the nacelle of a wind turbine as a static element may pivot around the wind turbine power, for example.

The first bearing ring and the second bearing ring describe respective bearing rings which comprise a central hole. The first bearing ring may be fixed to the turbine element which rotates together, e.g. with a shaft. The second bearing ring may be fixed to a static wind turbine element or vice versa.

In particular, the first bearing ring may be an outer bearing ring and the second bearing ring may be an inner bearing ring (or vice versa), wherein the outer bearing ring has a radially inner surface along a through hole and the inner bearing ring comprises a radially outer surface, wherein the roller element is coupled to the inner surface and the outer surface of the respective bearing rings. The first bearing ring may be the static bearing ring and the second bearing ring may be the rotating bearing ring or vice versa. Between the inner surface of the outer bearing ring and the outer surface of the inner bearing ring the inner volume may be defined. In particular, the inner volume may describe a gap between the inner surface of the outer bearing ring and the outer surface of the inner bearing ring. Grease is provided inside the inner volume in order to grease the roller elements such that wear is reduced.

The first surface (and e.g. the second surface) may be a surface which runs at least partially within a plane with a normal direction, wherein a component of the normal direction is at least parallel to a rotary axis of the turbine rotor. A further component of the normal direction may be directed in a radial direction. The radial direction may be defined by a direction which is perpendicular to the rotary axis and which crosses the rotary axis. The first surface and the second surface define mounting surfaces at which the first and second isolating rings are mounted and at which the respective wind turbine elements may be coupled in indirect contact.

In particular, at the first and/or the second surface, the first wind turbine element and/or the second wind turbine element may be coupled, which turbine elements have at least a section which is located outside of the nacelle of the turbine and which may be exposed to lightning strokes.

Between the first bearing ring and the second bearing ring the roller element is installed such that the rotating bearing ring is supported by the static bearing ring. The roller elements may comprise for example a ball shape, a cylindrical shape or a tapered roller shape.

The scraper element may be fixed to the first bearing ring, wherein the first bearing ring may be the rotatable bearing ring or the static bearing ring. The scraper element extends from the first bearing ring to the second bearing ring (which is the static or dynamic bearing ring) and abuts onto a respective abutting surface onto the second bearing ring. The scraper element has a relative movement with respect to the second bearing ring and thereby scrapes off the grease from the second bearing ring.

The scraper element may comprise a scraping lip which abuts onto the respective abutting surface. The scraper element may be made of a metallic material or of a rubber-like material. In particular, the scraper element may be made of an electrically isolating material such as a reinforced thermo set material (polyester or epoxy) or a thermoplastic material as described in more detail below.

The scraped off grease may be guided along the scraper element to a desired location, preferably inside a grease reservoir where the grease may be collected.

Hence, by applying the above described scraper element, grease is gathered and guided to a desired location, so that unintentional greasing of turbine components by the leaked grease is prevented.

According to a further exemplary embodiment, the bearing system comprises a sealing element which is mounted between the first bearing ring and the second bearing ring such that the inner volume between the first bearing ring and the second bearing ring is sealed from an environment of the bearing system. The sealing element may comprise in an exemplary embodiment a first sealing lip coupled to the first bearing ring and a second sealing lip coupled to the second bearing ring, wherein the first sealing lip and the second sealing lip are movable with respect to each other and form a labyrinth seal. The sealing element may also form a contactless sealing element or a labyrinth seal, for example.

According to a further exemplary embodiment, the scraper element is located in the environment with respect to the sealing element, such that grease which leaked through the sealing element from the inner volume is scrapable off at the environment from the respective second bearing ring. In other words, the sealing element is located between the scraper element (located in the environment) and the roller elements (located in the inner volume).

The sealing element may be part of a primary seal arrangement. By locating the scraper element outside of the inner volume and in the environment, respectively, the grease is captured outside of the inner volume after the grease passed the sealing element. Further provisions to guide the grease out of the inner volume, such as draining channels or other provisions, are obsolete. Hence, if scraping of the grease at the environment by the scraper element, a simpler design of the bearing system is achieved, because no provisions inside the inner volume for draining off the grease out of the inner volume are necessary.According to a further exemplary embodiment, the bearing system comprises a first isolating ring (e.g. a first seal carrier) and optionally a second isolating ring (e.g. a second seal carrier. The first isolating ring is mounted to the first surface of the first bearing ring such that the first isolating ring is locatable between the first bearing ring and the first turbine element, when being coupled to the first surface.

Optionally, in a further exemplary embodiment, the second bearing ring has a second surface to which a second turbine element of the wind turbine is coupleable such that the second isolating ring is locatable between the second bearing ring and the second turbine element, when being coupled to the second surface. The second isolating ring is mounted to the second surface of the second bearing ring. The roller element is installed inside an inner volume between the first bearing ring and the second bearing ring and which supports the first bearing ring rotatably to the second bearing ring.

According to a further exemplary embodiment, the bearing system comprises a first isolating ring, e.g. the first seal carrier, which is mounted to the first surface of the first bearing ring and comprises a second isolating ring, e.g. a second seal carrier, which is mounted to the second surface of the second bearing ring. The sealing element is mounted to at least one of the first seal carrier and the second seal carrier such that the first seal carrier and the second seal carrier are rotatable with respect to each other. The scraper element is fixed to the first seal carrier.

The respective isolating ring (e.g. the first seal carrier) is made of an electrically isolating material for electrically isolating the first bearing ring to the first turbine element.

The isolating rings, e.g. the seal carriers, differ to the bearing rings in such a way that the isolating rings separate the bearing ring from the wind turbine element.

The respective isolating ring may be fixed to the respective first or second surface. The respective isolating ring may be interposed between the first or second surface. Hence, the respective turbine element may be fixed to respective isolating ring, such that by the respective isolating ring e.g. forces may be transferred between the respective bearing ring and the respective turbine element. For this reason, the respective isolating ring may be formed sufficiently robust for withstanding the transmitted forces. Specifically, the entire wind turbine loads needs to be transferred from the turbine element through the isolating material to the bearing ring and vice versa.

The isolating ring may be alternatively or additionally a seal carrier, which (e.g. exclusively) hold a sealing element without transferring forces, such as transferring weight forces of the rotating turbine elements to the static turbine elements. The forces, such as the weight forces of the turbine elements are transferred from one bearing ring to the other bearing ring by the roller elements and not by the isolating ring.

The term "electrically isolating" denotes that e.g. the respective isolating ring comprises a resistance of more than 0,5 kΩ (kilo Ohms), preferably more than 1 kΩ, particularly when subjected to DC current. Hence, a small and controlled current flow flowing through the e.g. isolating ring is possible. Static discharges may therefore be avoided.

The scraper element may be fixed to the first isolating ring, e.g. the first seal carrier, wherein the first isolating ring may be fixed to the first bearing ring which may be the rotatable bearing ring or to the static bearing ring. The scraper element extends from the first isolating ring to the second isolating ring and/or to the second bearing ring (which is a static or dynamic bearing ring) and abuts onto a respective abutting surface. The scraper element has a relative movement with respect to the second isolating ring and/or the second bearing ring and thereby scrapes off the grease from the second isolating ring and/or the second bearing ring.

According to a further exemplary embodiment, the first isolating ring is a first seal carrier and the second isolating ring is a second seal carrier. The bearing system further comprises a sealing element which is mounted to at least one of the first seal carrier and/or the second seal carrier such that
a) the inner volume between the first bearing ring and the second bearing ring is sealed from an environment of the bearing system, and
b) the first seal carrier and the second seal carrier are rotatable with respect to each other.

In order to prevent the grease from draining off the inner volume, the first seal carrier, the second seal carrier and the sealing element are attached to the bearing rings. Hence, the grease may be sealed from draining off out of the inner volume to the environment. Between the inner bearing ring and the outer bearing ring the gap exists through which the grease drains off. The sealing element is adapted for sealing the gap. Thereby, the first seal carrier, such as a first seal ring, is attached to the first bearing ring and the second seal carrier, such as a second seal ring, is fixed to the second bearing ring. The first seal carrier and/or the second seal carrier clamp(s) a sealing element between each other and/or the first bearing ring and/or the second bearing ring.

The sealing element may be produced of a material with proper sealing properties and/or of a material which is electrically isolating, such as a rubber-like material. The sealing element may be fixed by the first seal carrier and the second seal carrier with respect to the first bearing ring and the second bearing ring in such a way that the sealing element has a friction surface either to the rotating elements, which rotates together with the turbine rotor, or the static elements.

According to a further exemplary embodiment, the isolating material of the first isolating ring, the second isolating ring and/or the sealing element is a composite material, in particular a reinforced thermo set material (polyester or epoxy) or a thermoplastic material. The isolating material may in particular be made in a glass fiber reinforced epoxy manner. The thermo set material may comprise a fibre volume fraction of larger than 20% (percent), where the fibres could be woven. Hence, creep can be reduced and avoided. The first turbine parts and/or the second turbine parts are generally made of steel or other metallic materials. The surface of the respective wind turbine element may be treated with friction paint or a zinc spray. Thereby, a high coefficient of friction (i.e. larger than µ=0,2 to 0,4, preferably 0,35) may be obtained between the metallic wind turbine element and the respective first and/or second isolating ring. A friction coefficient between the wind turbine part and the isolating ring may ensure a good connection between the parts and wear of the connecting parts may be minimized (vibrations) between the connected parts (i.e. the isolating ring and the respective wind turbine parts) are minimized. The isolating rings may be a composite disc which comprises a coating of a friction paint or a zinc spray with a thickness of e.g. less than 10 microns, so that a proper friction coefficient is achieved.

Summarizing, the isolating material is stable (not change dimensions or be subjected to fatigue failure) for the turbine lifetime, and provide a proper coefficient of friction. By using normal thermoplastic materials there is a risk that creep during the constant high pressure occurs. In particular, the isolating material is, as described above, a thermoplastic material with a relatively high glass transition temperature (e.g. PEEK) or a thermo set material. The thermoset (epoxy) resin may be fibre reinforced with woven mats (i.e. fibres parallel to a mating surface). In addition to being dimensional stable the isolation material has to provide a high coefficient of friction as e.g. the bearing ring else will move relative to the turbine structure when the wind turbine is subjected to high loads.

Hence, by the above described aspect a direct contact between the first bearing ring and the first turbine element is prevented by the first isolating ring which is made of an elastically isolating material. For example, if the first turbine element is a hub of a wind turbine, which is located outside of the nacelle, a lightening stroke that attacks on the hub is not transmitted by an interface to the first bearing ring, because the first bearing ring and the first turbine element are isolated from each other by the first isolating ring. A further electrical insulating provision such as an electric insulating ring between the bearing system and a structure part (e.g. nacelle) of the wind turbine is obsolete because the electrical insulation is integrated in the bearing system, in particular by the electrically isolating first isolating ring. The insulation material of the isolating rings provides isolation against the relevant electrical frequencies.

According to a further exemplary embodiment, the second isolating ring (e.g. the second seal carrier) is made of an electrically isolating material for electrically isolating the second bearing ring to the second turbine element.

According to a further exemplary embodiment, at least one of the first isolating ring, i.e. the first seal carrier, and the second isolating ring, i.e. the second seal carrier, comprises a passage through which grease is flowable between the inner volume and the environment. Grease is provided inside the inner volume in order to grease the roller elements for reducing reduce wear. The passage provides a connection from the inner volume to the environment in order to feed grease into the inner volume or in order to drain off the grease out of the inner volume to the environment. The passage may be formed e.g. by a groove, which is machined at a surface of the first isolating ring and/or the second isolating ring or by a respective installed tube.

According to a further exemplary embodiment, at least one of the first isolating ring, i.e. the first seal carrier, and the second isolating ring, i.e. the second seal carrier, has a grease reservoir for storing grease. The grease reservoir is connected to the inner volume for providing grease to or from the inner volume. A grease reservoir may be surrounded and formed by the first isolating ring and the second isolating ring. The grease reservoir may be formed in the environment outside of the inner volume. The grease reservoir may collect grease which flows due to dynamic movements and vibrations of the bearing rings through small gaps between the sealing element and its abutting surfaces. If the grease would not be collected inside the grease reservoir, a contamination of wind turbine elements, such as generator elements, may occur, in particular if the bearing system is installed in a direct drive wind turbine where the bearing system is used as a main bearing of the direct drive wind turbine.

In a further exemplary embodiment, the bearing system further comprises a grease collector, wherein the scraper element is formed such that the scraped off grease is guided along the scraper element to the grease collector. The grease collector may be installed inside the grease reservoir. Furthermore, the grease collector may form a tube which is guided through e.g. the passage to the environment, where grease cups are installed for gathering the grease. The grease cups may be detachably connected to the grease collector. If the grease cups are fully loaded, the grease cups may be exchanged by an empty grease cup. For example, the grease cups may be exchanged during a regular service of the bearing system or a general service of the wind turbine.

In a further exemplary embodiment, the scraper element and the grease collector may be formed integrally and by one common element. In particular, the scraper element may be formed by an edge section of the grease collector, which edge section abuts onto the respective surface for scraping off the grease.

In particular with the grease reservoir it is beneficial to place the scraper element to assist the guiding of the grease into the cups. The scraper elements may be placed either on the rotating or on the stationary isolating ring, i.e. seal carrier. The scraper elements may thus be either a stationary scraper element or rotatable scraper element. Rotatable and movable scraper elements may be beneficial with respect to certain high consistency grease.

According to a further exemplary embodiment, the first bearing ring is an outer bearing ring having a through hole which is surrounded by a radially inner surface of the outer bearing ring. The second bearing ring is an inner bearing ring comprising a radially outer surface, wherein the inner bearing ring is located inside the through hole and rotatably supported to the outer bearing ring by the roller element. According to a further exemplary embodiment, the wind turbine, in particular a direct drive wind turbine, is presented. The wind turbine comprises the above described bearing system, the first turbine element, and the second turbine element. The first bearing ring is coupled to the first turbine element and the first isolating ring, i.e. the first seal carrier is located between the first surface of the first bearing ring and the first turbine element. The second bearing ring is coupled to the second turbine element and the second isolating ring i.e. the second seal carrier, is located between the second surface of the second bearing ring and the second turbine element.

By the present invention, a stationary scraper and/or a rotating scraper may be located in particular outside in the environment of the bearing raceway area.

According to a further aspect of the invention, the function of an electrical insulation between wind turbine elements that are supported by the bearing system is provided by the bearing system itself. In particular, the electrical insulation function is integrated into the bearing system by providing a respective first and/or second isolating ring, i.e. seal carrier, made of an electrically isolating material. In particular, by manufacturing the respective isolating ring by a composite material, such as a reinforced thermo set material or a thermo plastic material, a proper friction coefficient between the isolating ring and the respective abutting surfaces of the respective bearing ring is achieved. The proper friction coefficient may ensure a good connection between the isolating ring and the bearing ring and minimize wear.

Hence, an electrical isolation of a wind turbine against e.g. lightning strokes, stray currents and/or currents from static electricity is achieved. In particular, the bearing system, such as a main bearing of the wind turbine, may comprise one or more electrical insulated isolating rings. Wind turbine elements, such as a hub, a generator (e.g. a rotor and a stator), a structure part of the wind turbine and/or a turbine rotor of the wind turbine may be connected respectively to the first (e.g. outer) bearing ring of the bearing system which carries the electrical insulated first isolating ring placed. The respective inner and outer (first and second) bearing rings which are coupled by the respective isolating ring to the respective bearing rings are than electrically isolated from other turbine elements of the wind turbine.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a perspective view of a bearing system comprising a scraper element according to an exemplary embodiment of the present invention;
Fig. 2 shows a schematical view of a bearing system according to an exemplary embodiment of the present invention;
Fig. 3 shows a schematical view of an exemplary embodiment of a bearing system to which turbine elements are attached;
Fig. 4 shows a schematical view of a wind turbine according to an exemplary embodiment of the present invention; and

### Detailed Description

The illustrations in the drawings are schematical. It is noted that in different figures, similar or identical elements are provided with the same reference signs.

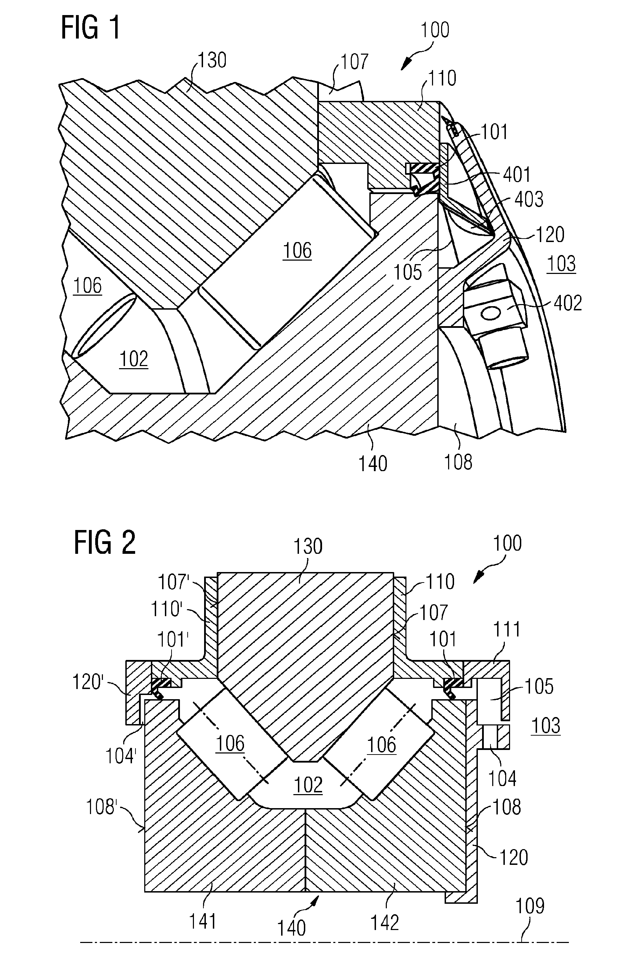

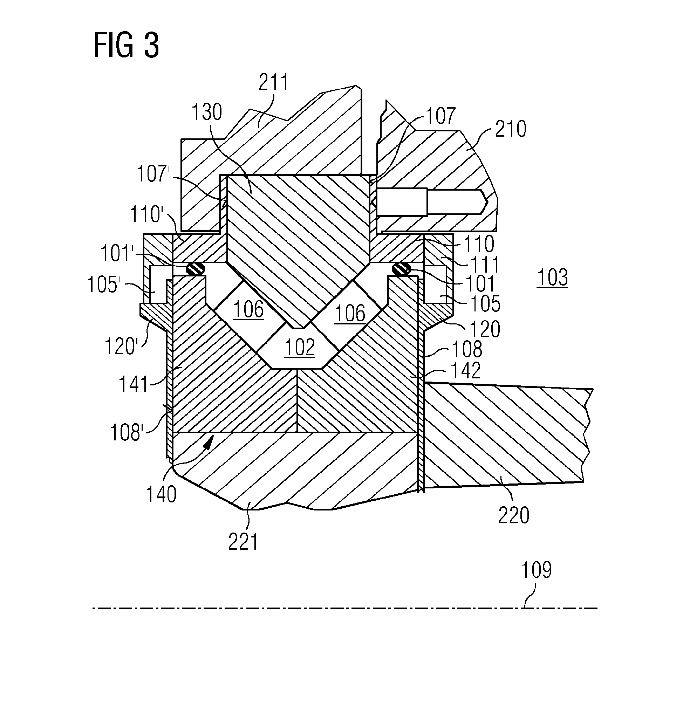

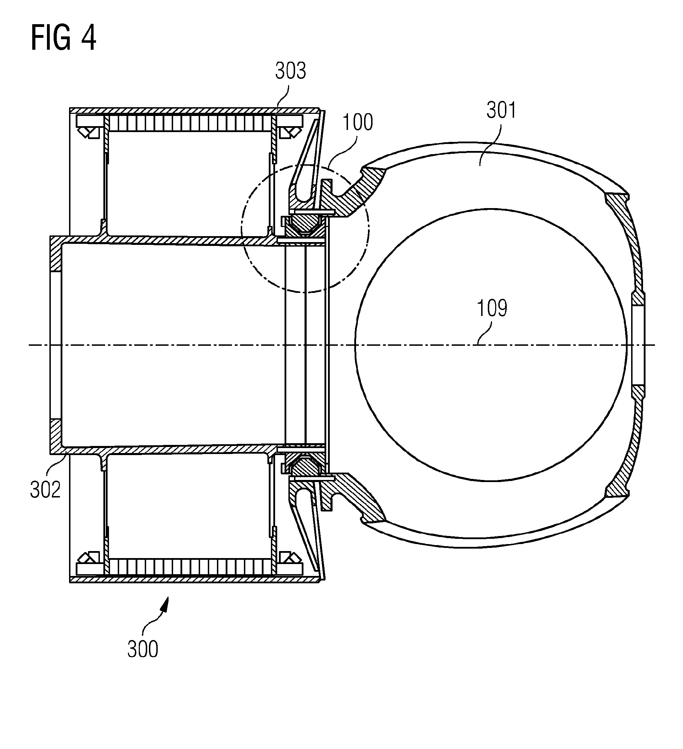

Fig. 1 shows a perspective view of the bearing system 100 according to an exemplary embodiment of the present invention. The bearing system 100 comprises a first bearing ring 130, a second bearing ring 140, a roller element 106, and a scraper element 403. The first bearing ring 130 has a first surface 107 to which a first turbine element 210 (see Fig. 3) of the wind turbine is coupleable. The second bearing ring 140 has a second surface 108 to which a second turbine element 220 (see Fig. 3) of the wind turbine 300 (see Fig. 4) is coupleable. The roller element 106 is installed inside an inner volume 102 between the first bearing ring 130 and the second bearing ring 140 and which supports the first bearing ring 130 rotatably to the second bearing ring 140. The scraper element 403 is coupled to the first bearing ring 130, wherein the scraper element 403 abuts onto the second bearing ring 140 such that grease is scrapable off from the second bearing ring 140.

The first (e.g. outer) bearing ring 130 is rotatably supported by the roller elements 106 to the second (e.g. inner) bearing ring 140. The first seal carrier 110 is fixed to the axially outer first surface 107. The second seal carrier 120 is fixed to an axially outer second surface 108 of the second bearing ring 140. Furthermore, the second bearing ring 140 is in sliding contact with the first seal carrier 110. The sealing element 110 is mounted between the first seal carrier 110, the second seal carrier 120 and a radially outer surface of the second bearing ring 140 such that the grease is prevented from draining out of the inner volume 102. The grease that exits the inner volume 102 and passes the sealing element 101 may flow along the second surface 108, for example.

A sealing plate 401 is fixed to the first seal carrier 110, wherein the sealing plate 401 rotates together with the first seal carrier 110. Furthermore, the sealing plate 401 abuts against the second surface 108 of the second seal carrier 120 and slides along the second surface 108, if the first seal carrier 110 rotates with respect to the second seal carrier 120. Grease that passes the sealing element 101 from the inner volume 102 to the environment 103 may be prevented from flowing further outside by the sealing plate 401 and the sealing element 403, respectively. However, some grease flows along a surface of the sealing plate 401 to a predetermined surface.

As shown in Fig.1, the scraper element 403 is mounted to the second seal carrier 120. The scraper element 403 is formed and aligned in such a way, that an edge of the scraper element 403 scrapes of grease from the predetermined surface of the sealing plate 401.

The grease that is scraped off from the predetermined surface by the scraper element 403 may be guided to a grease collector 402. The grease collector 402 may be fixed to the second seal carrier 120. The grease collector 402 may be a tube which connects a grease reservoir 105 between the first seal carrier 110 and the second seal carrier 120 with the environment 103. The grease reservoir 105 may be necessary for gathering grease which may leak out of the inner volume by dynamic movements of the bearing system for example. The scraper element 403 may be integrally formed with the grease collector 402, for example.

Furthermore, a grease cup may be coupled to the grease collector 402, such that the scraped off grease which is scraped off by the scraper element 403 may be drained off through the crease collector 402 to the grease cup. Alternatively, grease may be fed through the grease collector 402 inside the grease reservoir 105 and further into the inner volume 102 such that a grease supply system for the bearing system 100 may be provided.
Fig. 2 shows a bearing system 100 for a wind turbine 300 (see Fig. 4). The bearing system 100 comprises a first bearing ring 130, a first isolating ring, i.e. a seal carrier 110; 110', a second bearing ring 140, a second isolating ring, i.e. seal carrier 120; 120', and roller elements 106.

The first bearing ring 130 comprises a first surface 107; 107' to which a first turbine element 210 (see Fig. 3) of the wind turbine 300 is coupleable. The first seal carrier 110; 110' is mounted to the first surface 107; 107' of the first bearing ring 130 such that the first seal carrier 110 is locatable between the first bearing ring 130 and the first turbine element 210 (as shown in Fig. 3).

The second bearing ring 140 comprises a second surface 108; 108' to which a second turbine element 220 (see Fig. 3) of the wind turbine 300 is coupleable. The second seal carrier 120; 120' is mounted to the second surface 108, 108' of the second bearing ring 140 such that the second seal carrier 120; 120' is locatable between the second bearing ring 140 and the second turbine element 220.

The roller elements 106 are installed inside an inner volume 102 between the first bearing ring 130 and the second bearing ring 140 such that the first bearing ring is rotatably supportive to the second bearing ring 140.

The first seal carrier 110; 110' is made of an electrically isolating material for electrically isolating the first bearing ring 130 to the first turbine element 210. Furthermore, the second seal carrier 120, 120' may also be made of an electrically isolating material for electrically isolating the second bearing ring 140 to the second turbine element 220.

Furthermore, in Fig. 2 the rotary axis 109 of the turbine rotor of the wind turbine 300 is schematically illustrated in order to provide a better overview. The first seal carrier 110; 110', the second seal carrier 120, 120', the first bearing ring 130, the second bearing ring 140 and a sealing element 101, 101' may have an angular shape and may run along a circumferential direction around the rotary axis 109. The above described elements may comprise a closed angular ring shape around the rotary axis 109 or comprise an open shape such as a slotted shape.

The sealing element 101, 101' is mounted in the exemplary embodiment shown in Fig. 2 to the first bearing ring 130, the first seal carrier 110, 110' and the second seal carrier 120, 120'. The first seal carrier 110, 101' and/or the second seal carrier 120, 120' carry and support the sealing element 101, 101'. The sealing element 101, 101' may be made of a rubber or another elastic isolating material with proper sealing properties. In particular, the respective sealing elements 101, 101' separate an inner volume 102 from an environment 103 around the bearing system 100. Inside the inner volume 102 the roller elements 106 are located. Grease is filled inside the inner volume 102 for lubricating the roller elements 106.

As shown in Fig. 2 and indicated by the rotary axis 109, the first bearing ring 130 is an outer bearing ring having a through hole which is surrounded by a radially inner surface. The second bearing ring 140 is an inner bearing ring comprising a radially outer surface. The inner bearing ring is located inside the through hole and is rotatably supported to the outer bearing ring by the roller elements 106. For example, the first outer bearing ring 130 may be mounted to a wind turbine structure, such as a nacelle of the wind turbine 300, whereas the second bearing ring 140 may be mounted to the turbine rotor of the wind turbine 300 and may rotate together with the turbine rotor. Hence, the first bearing ring 130 may be a static component and the second bearing ring 140 may be a rotating dynamic component. Alternatively, the first outer bearing ring 130 may be a dynamic component (such as the turbine rotor or the hub) and the second inner bearing ring 140 may be a static component (such as a stator of a generator) which is fixed to the turbine structure, i.e. the nacelle.

As further shown in Fig. 2 and indicated by the rotary axis 109', alternatively the first bearing ring 130 may be an inner bearing ring having a through hole which is surrounded by a radially outer surface. The second bearing ring 140 may be an outer bearing ring comprising a radially inner surface.

The second bearing ring 140 may comprise two sub-bearing rings (disks), such as the first sub-bearing ring 141 and the second sub-bearing ring 142. Both sub-bearing rings 141, 142 are detachably mounted together, such that a proper assembling i.e. of the roller elements 106 is achieved. For example, for exchanging a roller element 106, the sub-bearing rings 141, 142 may be separated from each other such that a simpler accessibility to the roller element 106 is provided.

In Fig. 2, on the right side a first exemplary embodiment of the first and second seal carrier 110, 120 and on the left side a second embodiment of the first seal carrier 110' and the second seal carrier 120' is shown.

On the left side in Fig. 2 the first seal carrier 110' is a sealing ring with an L-shaped cross-section. The first seal carrier 110' runs along the first surface 107' in circumferential direction. In particular, the first seal carrier 110' comprises a section which extends axially from the first surface 107' of the first bearing ring 130. At an axial free end of the axial extending section of the first seal carrier 110', the second seal carrier 120' is provided. The second seal carrier 120' contacts the axial end of the first seal carrier 110' and is fixed to the second surface 108' of the second bearing ring 140.

The sealing element 101' is mounted between a radially outer end of the second bearing ring 140, a radially inner end of the first seal carrier 110' and an axially inner end of the second seal carrier 120'. The sealing element 101' may comprise a sealing lip which contacts for example the radially outer surface of the second bearing ring 140.

A groove may be machined at a contact surface between the second seal carrier 120' and the second bearing ring 140, such that between the contact surface of the second seal carrier 120' and the second surface 108' a passage 104' is formed. Hence grease that leaks through the sealing element 101' may be guided in a defined manner through the passage 104' to the environment. To the passage 104', a grease cup may be connected such that the leaked grease may be gathered into the grease cup. Furthermore, grease may also be supplied through the passage 104' to the inner volume 102.

On the right side as shown in Fig. 2, a further first seal carrier 111 may be fixed to the first seal carrier 110 and may abut with a further end at the second seal carrier 120. Between the first seal carrier 110, the further first seal carrier 111 and the second seal carrier 120, a grease reservoir 105 may be formed. Inside the grease reservoir 105, grease is gathered which leaks through the sealing element 101. From the grease reservoir 105, the collected grease may be drained off in a defined manner through the passage 104.

Fig. 3 shows an exemplary embodiment of the bearing system 100 according to the present invention. The bearing system 100 shown in Fig. 3 comprises the same features as the bearing system 100 as shown on the right side and/or the left side in Fig. 2. Additionally, the (further) first and second turbine elements 210, 211, 220, 221 that are attached to the respective first and second bearing rings 130, 140 are shown.

As shown in Fig. 3, a first turbine element 210, such as a turbine element which is partially located outside of the nacelle (e.g. the hub 301 (see Fig. 4)) may be fixed to the first bearing ring 130. Between the first bearing ring 130 and the first turbine element 210, the first seal carrier 110 is interposed. In particular, the first seal carrier 110 is fixed to the first surface 107 of the bearing ring 130. Hence, the first turbine element 210 is not in direct contact with the first bearing ring 130 but is separated from the first bearing ring 130 by the thickness of the first seal carrier 110. Hence, the first turbine element 210 is electrically isolated to the first bearing ring 130.

Furthermore, a further first turbine element 211, such as a turbine element which is completely located inside the nacelle (e.g. a rotor of a generator) may be additionally attached to the first bearing ring 130. As can be taken from Fig. 3, as long as the further first turbine element 211 is not in direct contact with the first turbine element 210 an electrical isolation is provided because an electrical path between the first turbine element 210 and the further first turbine element 211 is interrupted by the first seal carrier 110 and by an air gap between the first turbine element 210 and the further first turbine element 211. Hence, in the exemplary embodiment as shown in Fig. 3, no further electrical isolation provisions have to be applied.

As shown in Fig. 3, to the second surface 108 of the second sub-bearing ring 142 the second seal carrier 120 is fixed. As shown in Fig. 3, a second turbine element 220, such as a turbine element which is partially located outside of the nacelle (e.g. a turbine structure (e.g. a housing) of the nacelle 302 (see Fig. 4)) may be fixed to the second sub-bearing ring 142. Between the second bearing ring 140 and the second turbine element 220, the second seal carrier 120 is interposed. Hence, the second turbine element 220 is electrically isolated to the second sub-bearing ring 142 by the second seal carrier 120. A lightning stroke which attacks at the housing of the nacelle will not be transferred to the first turbine element 210, the further first turbine element 211 and a further second turbine element 221.

To a radially inner side of the first sub-bearing ring 141 and the second sub-bearing ring 142 a further second turbine element 221 may be fixed, whereas the further second turbine element 221 is electrically isolated to the second turbine element 220 by the second seal carrier 120. The further second turbine element 221 may be for example a stator of a generator which is completely installed inside the nacelle.

Fig. 4 shows a schematical view of the wind turbine 300. The hub 301 is coupled to the turbine rotor of the wind turbine 300, which rotates around the rotary axis 109. Furthermore, the turbine rotor may be the first turbine element 210 and may be coupled to the first bearing ring 130 as described above by Fig.2 and Fig. 3. Furthermore, a rotor 303 of a generator of the wind turbine 300 may be the further first turbine element 211 and may be coupled to the first bearing ring 130 as described above by Fig.2 and Fig. 3. Hence, the turbine rotor drives the first bearing ring 130 and thus the rotor 303 of the generator. The first bearing ring 130 may be the radially outer bearing ring of the bearing system 100. The turbine structure 302 may be the stator of the generator or a structure of the nacelle. The turbine structure 302 may denote the second turbine element 220 and may be coupled to the second bearing ring 140. The second bearing ring 140 may be the radially inner bearing ring of the bearing system 100. Hence, the first bearing ring 130 may be driven by the rotation of the turbine rotor and may rotate with respect to the second bearing ring 140 which is coupled to the turbine structure 302, for example.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Bearing system (100) for a wind turbine (300), the bearing system (100) comprising
a first bearing ring (130) with a first surface (107) to which a first turbine element (210) of the wind turbine is coupleable,
a second bearing ring (140) with a second surface (108) to which a second turbine element (220) of the wind turbine (300) is coupleable,
a roller element (106) which is installed inside an inner volume (102) between the first bearing ring (130) and the second bearing ring (140) and which supports the first bearing ring (130) rotatably to the second bearing ring (140),
a scraper element (403) which is coupled to the first bearing ring (130),
wherein the scraper element (403) abuts onto the second bearing ring (140) such that grease is scrapable off from the second bearing ring (140).

2. Bearing system (100) according to claim 1, further comprising
a sealing element (101) which is mounted between the first bearing ring (130) and the second bearing ring (140) such that the inner volume (102) between the first bearing ring (130) and the second bearing ring (140) is sealed from an environment (103) of the bearing system (100).

3. Bearing system (100) according to claim 2,
wherein the scraper element (403) is located in the environment (103) with respect to the sealing element (101), such that grease which leaked through the sealing element (101) from the inner volume (102) is scrapable off at the environment from the respective second bearing ring (140).

4. Bearing system (100) according to claim 2 or 3, further comprising
a first seal carrier (110) which is mounted to the first surface (107) of the first bearing ring (130),
a second seal carrier (120) which is mounted to the second surface (108) of the second bearing ring (140),
wherein the sealing element (101) is mounted to one of the first seal carrier (110) and the second seal carrier (120) such that the first seal carrier (110) and the second seal carrier (120) are rotatable with respect to each other.

5. Bearing system (100) according to claim 4,
wherein the scraper element (403) is fixed to the first seal carrier (110).

6. Bearing system (100) according to one of the claims 4 to 4,
wherein the first seal carrier (110) is made of an electrically isolating material,
wherein the first seal carrier (110) is mounted to the first surface (107) of the first bearing ring (130) such that the first seal carrier (110) is located between the first bearing ring (130) and the first turbine element (210), when being coupled to the first surface (107).

7. Bearing system (100) according one of the claims 4 to 6,
wherein the second seal carrier (120) is made of an electrically isolating material,
wherein the second seal carrier (120) is mounted to the second surface (108) of the second bearing ring (140) such that the second seal carrier (120) is located between the second bearing ring (140) and the second turbine element (220), when being coupled to the second surface (108).

8. Bearing system (100) according claim 7,
wherein at least one of the first seal carrier (110) and the second seal carrier (120) comprises a passage (104) through which grease is flowable from the inner volume (102) to the environment (103).

9. Bearing system (100) according to one of the claims 6 to 8,
wherein the isolating material is a composite material, in particular a reinforced thermoset material or a thermoplastic material.

10. Bearing system (100) according to one of the claims 3 to 9,
wherein at least one of the first seal carrier (110) and the second seal carrier (120) has a grease reservoir (105) for storing grease,
wherein the grease reservoir (105) is connected to the inner volume (102) for providing grease to the inner volume (102).

11. Bearing system (100) according to claim 10, further comprising
a grease collector (402) mounted to the first bearing ring (130),
wherein the scraper element (403) is formed such that the scraped off grease is guidable to the grease collector (402).

12. Bearing system (100) according to one of the claims 1 to 11,
wherein the first bearing ring (130) is an outer bearing ring having a through hole which is surrounded by a radially inner surface of the outer bearing ring, and
wherein the second bearing ring (140) is an inner bearing ring comprising a radially outer surface, and
wherein the inner bearing ring is located inside the through hole and is rotatably supported to the outer bearing ring by the roller element (106).

13. Wind turbine (300), in particular a direct drive wind turbine, the wind turbine (300) comprising
a bearing system (100) according to one of the claims 1 to 12,
the first turbine element (210), and
the second turbine element (220),
wherein the first bearing ring (130) is coupled to the first turbine element (210),
wherein the second bearing ring (140) is coupled to the second turbine element (220).

14. Method of scraping off grease from a bearing ring (130; 140) of a wind turbine (300) by a bearing system (100) according to one of the claims 1 to 11.
